# EUROPEAN PATENT SPECIFICATION

(11) **EP 0 627 978 B1**
(45) Date of publication and mention of the grant of the patent: **20.08.1997**
(21) Application number: 94903869.9
(22) Date of filing: 23.12.1993
(51) Int. Cl.: B29B 17/00

(54) **MANUFACTURING PROCESS FOR PRODUCTS, IN PARTICULAR PANELS, MADE OF INSULATING MATERIAL, AND PRODUCT OBTAINED BY SUCH PROCESS**
VERFAHREN ZUR HERSTELLUNG VON GEGENSTÄNDEN, INSBESONDERE PLATTEN, AUS ISOLIERMATERIAL, UND NACH DIESEM VERFAHREN HERGESTELLTER GEGENSTAND
PROCEDE DE PRODUCTION DE PRODUITS, EN PARTICULIER DE PANNEAUX, EN MATERIAU ISOLANT ET PRODUIT AINSI OBTENU

(30) Priority: 30.12.1992 IT BL920019
(43) Date of publication of application: 14.12.1994
(73) Proprietor: ELISA DI DE SANTI PIERO, I-31020 Lovadina (IT)
(72) Inventor: DE SANTI, Piero, I-31020 Lovadina (TV) (IT)
(74) Representative: Dalla Rosa, Adriano
(86) International application number: EP9303676
(87) International publication number: WO9415766

(56) References cited:
- DATABASE WPI Week 8412, Derwent Publications Ltd., London, GB; AN 84-071857 12! 'Heat insulating lightweight moulding' & JP,A,59 026 208 (BESSHO I) 10 February 1984
- DATABASE WPI Week 9342, Derwent Publications Ltd., London, GB; AN 93-330753 42! 'Producing structural material' & JP,A,5 237 470 (SANGYO GIJUTSU KENKYUSHO KK) 17 September 1993
- PATENT ABSTRACTS OF JAPAN vol. 17, no. 53 (M-1361) 3 February 1993 & JP,A,04 263 910 (SHIZUOKA PREFECTURE ET ALIA) 18 September 1992

## Description

The invention concerns a manufacturing process for products of insulating material, in particular thermic insulating material, to be installed in habitable buildings, and also concerns a product in particular a thermic and sound insulating panel, obtained by such manufacturing process.

From JP-A-59 026 208 is known a manufacturing process of heat insulating moulding, using a mixture obtained by adding a finely ground styrene resinous foam as essential raw material and a thickener, a flame-retarding agent or a water-repellent agent or their mixture to a waste paper, wetted under immersion in water and shredded in particles and fibers of reduced dimensions, and by press moulding into required form such mixture of ground styrene resin foam, waste wetted paper and thickener, flame-retarding agent or water-repellent agent, and by drying it.

In contrast to the process according to JP-A-59 026 208, the present invention relates to a manufacturing process which dispenses with the use of styrene resinous foam.

This process is defined in the appended claim 1.

The present invention will result more comprehensive from the following description, given solely by way of a not limitative example, and with reference to the single enclosed drawing showing schematically a system for the industrial production of panels or similar finished products in accordance with the process of the present invention.

The present process is substantially provided for the manufacturing of finished products of various type, form and dimensions in particular panels to be installed in civil and industrial and promiscuous habitable buildings, for insulation purposes, specially for the thermic insulation of the internal and external ambients of such buildings and for partition and equipped walls.

This process substantially provides the use of insulating materials like paper, cardboard, and similar material which are generally rejected after the use and which otherwise would be abandoned or in case recovered for their recycling in other application fields, as for example the manufacturing of recycled paper, cardboard, with per se known methods and uses.

These papers, cardboard and the like materials may be of any type, forms, dimensions, specific weights, compositions and quantities and are collected from the collecting and storage places thereof, in order to be treated in the ways and for the purposes hereinafter described. In particular, in the case in which as raw material for the following manufacturing process it is used the paper, it is to point out that such paper may be of any type for example: printing paper for rotogravures, magazines, newspapers of any quality of paper (with or without watermark and so on), paper for several type of uses and the like, any type of Bristol board, rigid and in more layers and the like as well as new paper derived from machinery trim and from paper factory stock or from burnt and extinguished material or from facilitated reading paper or tabulations from computing units.

In the case in which as raw material for the following manufacturing process be utilized cardboard or paper for packing in general, there may be used for example cardboard boxes for every packaging use, paper for external covering, Kraft and test paper, duplex or chamois colour paper, corrugated paper (semichemical, straw paper, raw paper ), microwave board, corrugated board or similar cardboards, of same type of materials or with variable combinations of single components of paper, cardboards, Bristol boards and the like, printing shop scraps and sanitary paper.

Likewise, in addition to these raw materials it may be used the cellulose, separately or in combination with the above mentioned raw materials, at different and variable ratios thereof. Preferably, the cellulose may be obtained from the recovery and further treatment of papers, Bristol boards, cardboards and similar aforesaid materials, in a conventional way, and it may be used in a solid and/or liquid state, or it may be obtained directly from the natural wood or from vegetables of various kind like for example the foliage, the tree fruits (pine-cones, chestnut husks etc...), underwood products, vegetable essences in general, seaweeds, plant derivatives as rice and leguminouses etc... by submitting these components to suitable and per se known treatments for obtaining such cellulose.

In alternative, instead of these raw materials there may be used also waste and scraps from processes of materials and fabrics of the most different types and uses, with cloths of natural and/or synthetic fabrics, for example assigned to the clothing, industrial field etc..., which components may be used separately or in combination with the previously mentioned raw materials of paper, cardboard, Bristol board and cellulose.

All the raw materials which are used in accordance with the present invention are previously drawn from the respective stocking and collecting sites with loading and transport machines, vehicles and equipments of per se known kind and transferred toward the selected sites for the raw material treatment with the methods and purposes hereinafter described. Firstly, on these sites such raw materials are submitted to a heating process at suitable times and temperatures to insure satisfactory drying of the humidity and water or other liquids contained therein. Advantageously, for performing this operation there are used appliances, plants and machines suitable for this purpose and of common use as for example various type of heating and/or dehydrating appliances and systems (stoves, ovens, radiant lamps, microwaves, convectors, ventilation systems, natural or forced air circulation drying systems, which air is heated or not with high or low pressures, vacuum pumps systems, hygroscopic agents etc.), and such operation in case may be divided in two steps, respectively a first step of partial or total drying of raw materials as previously considered, before to start the treatment steps which will be specified, for obtaining finished products, and a second step of partial or total drying of such finished products.

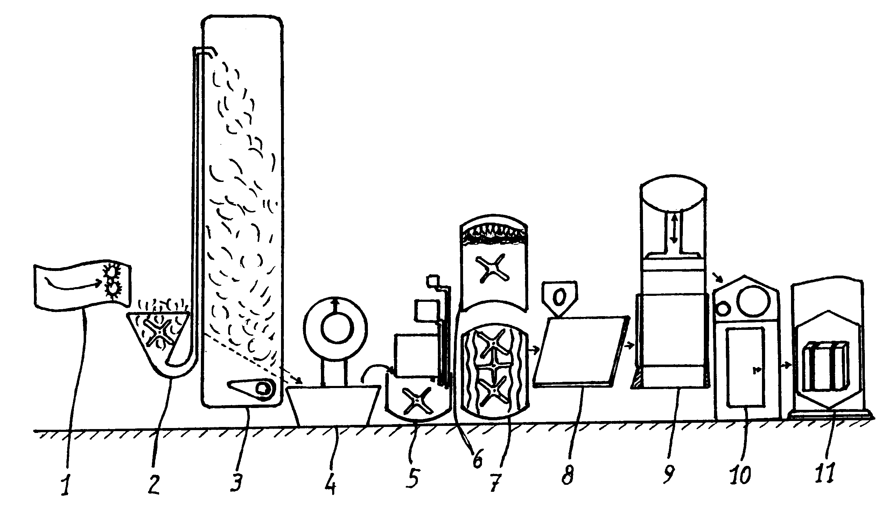

Afterwards, during the first step of the present process, the raw materials submitted to a partial or total drying are manually or automatically transferred, for example by means of suitable conveyors of per se known type, toward one or more triturating, grinding, crushing systems and the like to define a triturating, grinding, shredding or the like operation adapted to produce preferably a plurality of pieces, strips, fibres with reduced forms and sizes, said conveyors and triturating, grinding, crushing systems and the like being indicated by way of example in a subsequent part of the description, with reference to the treatment plant shown in the figure of the present patent.- The object of this first manufacturing step is to triturate, mince, and grind the differently used raw materials in parts of reduced dimensions, so as to be able to treat them suitably as it will be described in detail in the other manufacturing steps of the present process, depending on the respective finished products to be manufactured.

In the second manufacturing step of the process according to the invention, the so dried, triturated, minced etc. raw materials are mixed with adhesives, bonding agents or the like means, which are adapted to bind indissolubly the raw material small pieces thereamong, with the possible addition of special materials or additives with specific functions, for the purposes and in the manners hereinafter described. This mixing can be done either directly on the triturated, minced, ground etc... mass of raw materials, in the course of the previous manufacturing step and without the use of specific mixing equipments, or by using these mixing equipments, of the types which will be described with reference to the treatment plant. In particular, these adhesives, bonding agents and the like are suitable to provide for a close and uniform amalgamation thereof with the raw material small parts and the other used special substances and/or additives, which will be hereinafter described by way of example, and are collected, transferred toward the application place and applied on position by means of suitable systems and equipments (swinging nozzles, dispensers etc.) suitable to spray and lead adequately such adhesives ,bonding agents, and the like onto the mass of the triturated, minced, ground etc... raw materials.

As adhesives and bonding agents there may be used advantageously polyurethanic adhesives with or without solvent or in aqueous leakage suspension, finishing for synthetic skin manufacturing, glucoses, isoglucoses, dextroses, caramels, simple starchs, modified and esterificated starchs and derivatives thereof, dextrines, sorbitols, mannitols, maltitols, xilose, xilitol, gluten, bran, maize raw oils, rubber solutions, monocomponent and multi-component polyurethanic sealing agents, self-levelling with low coefficient of elasticity, hydrocarbon-proof or not, acrylic, siliconic, polysulphidic, butylic and vinylic sealing agents (generally employed for alimentary and industrial uses), cold siliconic rubbers, granulated thermoplastic materials with ethylene vinyl acetate, polyurethanic materials, polyester, polyamide, hot melts, powdered or liquid thermosetting materials as ureic resins, melaminic resins, phenolic resins, polyester resins, epoxy resins, novolacquers, bonding materials derived from synthesis of animal, vegetables, mineral and chemical products, bonding materials from fish or bones, adhesive pastes, carboxidmetylcellulose, liquid or powdered metylcellulose, vinylic hotmelts, special adhesives for bookbindery, sugars, starchs, SBS rubbers, SBR rubbers, neoprenic rubbers, chlorine caoutchouc rubbers, acrylic rubbers, ethylenic rubbers, vegetables adhesives, animal glues, caseine glues, tannin glues, pure silicates or silicates which are catalyzed, colophonic resins, single hydrocarbonic resins, hydraulic adhesives, asphalts, primers, dextrines, skin gelatines, sealing agents and adhesives, stuccoes, adhesives deriving from waste materials and adhesives, recycling and expanding rubbers, for alimentary or not alimentary use.- These adhesives and bonding materials can be added at variable ratios thereof with respect to the triturated, minced, ground etc... mass of raw materials, preferably comprised between approximately 5% and 100% weight or volume. Of course, for this invention there may be used also other kind of adhesives and bonding agents for obtaining the previously cited objects.-

Further materials which during the second manufacturing step of the present process are mixed, contemporaneously of the aforesaid bonding agents and adhesives, with the mass of the triturated, minced, ground, etc... raw materials are fire-retardant materials suitable to make self - extinguishing, and high temperature resistant such fire-retardant mass.

These fire-retardant materials, which give features of combustion inhibition to the aforesaid mass, and which advantageously have also marked features of absorption of the atmospheric humidity, are generally constituted by carbonates, silicates, urea, micronized silicas, and the like, and also by additive agents like borax and boron derivatives, antimony dioxide and trioxide, kaolins, silica based fire-retardants, aluminium hydrates, chloride materials, talc, bentonites, wherein these fire-retardant materials can be mixed with the mass of triturated, minced, ground etc... raw materials, with a variable ratio preferably comprised from 0,2% to about 50% volume or weigh of the same materials with respect to that of such mass.

Advantageously, moreover, a finished product as for example a thermoinsulating panel obtained with the present manufacturing process may contain by way of example only a volume or weight ratio comprised from 7% to 10% of borax and from 20 to 30% of kaolin with respect to that of the mass of triturated, minced, ground etc... raw materials.

Also in this case, as previously, there may be employed fire-retardant materials of different and per se known kind to obtain the same above mentioned objects.

Moreover, the mass of triturated, minced, ground, etc... raw materials and mixed with the adhesives and bonding materials as well as the above mentioned fire-retardant materials, can be mixed also with further additive materials, of per se known type, suitable to confer special features to the same mass, as for example water-repellent or humidity absorbing substances, and condensate absorbing substances, anti-mildews substances, anti-corrosive and anti-odour substances, as well as bactericide, disinfectant, sterilizing and fertilizing substances.

The mixture, amalgamation or kneading of triturated, minced, ground etc... raw materials with such fire-retardant and additive substances is obtained in such a way as to get compositions suitable for the needed features that the panel or the finished product in general must have, for the special use to which it is assigned.

Such compositions, therefore, may be obtained with several and variable combinations and percentages of the single components (raw materials and bonding agents, adhesives, etc.), depending on the final results to be obtained.

Moreover, in accordance with the present manufacturing process, the addition of the adhesives, bonding agents, and similar means may be performed advantageously with two different criteria, in such a way to permit to obtain always the above mentioned objects.- A first criterion of addition thereof is based on the fact to add to the mass of triturated, minced, ground etc... raw materials, together with the above mentioned fire-retardant substances and additive substances, such adhesives and bonding agents at the solid state, powdered or granulated, at not heated conditions namely at the ambient temperature and preferably by using the specific mixing equipments, so to obtain a homogeneous kneading of such adhesives and bonding agents as well as fire-retardant and additive substances with the mass of triturated, minced, ground etc... raw materials, which kneading thence lends itself for the next manufacturing steps which will be described. A second criterion of addition thereof is based on the fact to spray, wet or pour such adhesives, bonding agents or similar means at the liquid state or at a liquid dispersion thereof, in case diluted with suitable diluents and at not-heated conditions namely at the ambient temperature, together with said fire-retardant and additive substances, onto the mass of the triturated, minced, ground etc... raw materials, which operation in the case of spraying, wetting etc... is performed by means of common spraying devices, provided with orientable and or fixed nozzles and possible dispensers for the quantity of the adhesives and bonding agents, thereby leading them adequately and directly onto the aforesaid mass with suitably regulated spraying pressures, in order to obtain the desired density, quantity, weights, and dimensions thereof, before to submit this aggregate to the subsequent treatment steps which will be described.

The present manufacturing process comprises also a third manufacturing step, where the mass of triturated, minced, ground etc... raw materials mixed with said bonding substances, adhesives, fire-retardant and additive substances is transferred by conveyor means toward at least a moulding or pressing station, adapted to press such mixed mass with settled pressures and at heated or cooled conditions with pre-established temperatures, such as to obtain the melting or crystallization of the adhesives and bonding agents, in order to make a panel or finished product of various type, having forms, dimensions and structural characteristics required for the foreseen functions. In particular, the moulding or pressing operation is effected within the time and with the temperatures needed for melting or crystallizing such adhesives and bonding agents and the close amalgamation thereof with the triturated, minced, ground etc... raw materials and also with the above cited fire-retardant and additive substances, with such pressures as to keep all the aforesaid component parts of these panels or finished products of various kind closely and indissolubly adherent to each other, and by utilizing suitable machines as i.e. injection moulding presses with closed moulds, having different moulding pressures, mechanical, hydraulic and automatic bending and not-bending presses, calenders, presses with open dies (gravity die castings), or other machines, equipments and plants commonly used for this kind of processings.-

Moreover, as support for this moulding, pressing and the like operation there may be used also plants, machines and equipments adapted to obtain some additional processings of the so obtained panel or finished product, as for example : turnings, millings, shearings, grindings, shapings, beadings, coatings and any other suitable processing for the most different uses in the moto-rcar, motor-cycle fields, building, industry, furniture making field for the interior furnishings, and the complementary component parts thereof, effective thermic and sound insulations, and at different combinations thereof as the manufactures of building fittings, the reinforced panels for several uses, tubing and piping insulation coverings, the effective tubings, the floorings and counter-ceilings, the artificial ornamental trees, in combination with refractory support materials for any finished product, the manufactures of pots, fertilized humus and containers adapted for the germination of cultivation trees and flowers, the biodegradable bulkheads etc...-The transport of the mass of triturated, minced, ground etc... raw materials mixed with the fire-retardant, adhesive, bonding and additive substances toward the moulding or pressing station is done directly, after the second manufacturing step, in the case in which the adhesive and bonding substances be added with the above mentioned first addition criterion thereof and by using advantageously at least a passing tube or conduit before the addition of the adhesives and bonding agents with the above mentioned second addition criterion thereof, so as to permit to compact the mass itself for the following spraying of such adhesives and bonding agents thereon.

In alternative, instead of being obtained with a continuous operative cycle as described, the mixed mass to be mould or pressed may be obtained also separately with similar manufacturing operations performed in advance and in different places, for example by means of maceration and pulper additivation of the paper raw material and the subsequent preheating thereof, by dissecting the additivated and glued paper raw material etc.., and thereafter such mixed mass can be directly submitted to moulding or pressing operations upon additivation of such fire-retardant and additive substances and, in the case in which they are absent, also with adhesives and bonding agents. Then, when the moulding or pressing operations are concluded, the so manufactured panel or finished product is transferred by means of conveyor means to a drying zone to provide for the full drying thereof with per se known appliances, plants, and machines and generally of the same type described previously for the preventive drying of the raw materials. Subsequently, the panel or finished product is packed in a traditional way and predisposed for the dispatch and delivery to the utilization place.

It is to point out that, instead of being packaged as panel or finished product, it is also possible to package panels or semi-finished products with different forms (sheets, coils, multilayers, etc...) and formed by the raw materials mixed with fire-retardant substances, adhesives and bonding agents as well as additives, and not yet submitted to the moulding or pressing operations, so that to send these products or semi-finished panels to transforming supplier factories for performing with quality and quantity such moulding or pressing operations, so as to obtain panels or finished products and in case also further treatment processing thereof of the same type previously described.

The so obtained panels can be advantageously used as thermic insulating panels, sound absorbing panels etc..., to be installed on habitable, civil, and industrial, and promiscuous buildings, for purposes of insulating external and internal ambients as well as partition walls, equipped walls, and the like, and they can also have the most different and variable forms, dimensions and weights, and different aspects also thanks to the possibility to submit the same panels obtained with moulding or pressing operations to further more suitable processings. Additional uses of the panels may be for absorbing humidity, condensate, mildews, water, pollutant substances, dyes, paints, and as humid or humidified ground to prepare intensive vegetable cultures (mushrooms etc...), and similar. The finished products attainable therefrom, in addition to the use thereof as insulating materials, and in particular thermal, sound etc... insulating materials, may be employed for the most different uses as for instance for animal beds, transport containers for liquid chemical products, stuffings, finishing panels for furnishings and counter-ceilings, counter-walls, coverings for corners, columns arid surfaces for accident preventing uses, statues, tailor's dummies, working and drawing tables, tapestry for home and cars, supports of different type, aquarium insulating materials, preformed and shaped parts for transporting machinery, tools, plants, equipments, orthopaedic devices, bumper elements, flower-culture and tree-nurseries, greenhouses, pots, fertilizing materials, base supports for cultivations of mushrooms, trees, vegetables, vines, printed dressing complements, clothes, garments and clothes in general, exhibition dressing, games and toys in general, amalgams and agglomerated materials, gliders, albums, folders, files, sound-proof boxes, sound amplifying, equipment anchorage, stop and sealing rings and gaskets, target firing shapes, anti- deflagrating complements, components for equipments, materials, and plants for accident and fire prevention, anti-vibrating devices, air-conditioning and climatisation, drying and refrigerating systems, cinema, theater, laboratory, naval field furnishings; sacred and urban furnishings; school and community furnishings; furnishings for terraces, offices, shops for commercial business, goods to be disposed of, carnival articles, funerary and gift articles, remembering, sport articles; technical industrial articles, lifts etc...-

The present manufacturing process, therefore, permits to obtain such panels and finished products by simple and almost completely automatized processings, which still being manufacturing panels or finished products with sophisticated technology and quality, may be obtained with simple machines, plants and equipments easy to be found and which can be utilized by skilled workers having a lowest specific training, and thus lend themselves for being exploited even on scarcely or not industrialized zones and territories, like i.e. the nations under development, said processings being requiring also reduced manual interventions by utilizing rejected raw materials which can be found on large scale on the market and at reduced costs, which raw materials can be also utilized and recycled again when the panels and finished products would be used for further uses, and involving a subsequent processing thereof and which moreover do not originate any waste pollution ( smogs, powders etc...) during their processing and production.

A manufacturing plant adapted to manufacture panels and/or finished products as from the process according to the present invention, could be formed, as evident from the drawing, by a plurality of treatment stations interconnected by at least one transport and conveying means of per se known type and including in succession a trituration, mincing and/or grinding station 1 in which the collected raw materials are submitted to the trituration, mincing, grinding and similar processes in order to obtain a plurality of parts, strips, fibres of reduced form and sizes; a collecting and loading hopper 2 for the triturated, minced, and/or ground etc... raw materials, adapted to transfer the same, with the aid of possible exhaust fans (not shown) to a storage bin or container 3 for their temporary stocking; a weighing or volumetric metering device 4 adapted to meter opportunely the different quantities of raw materials with those of the fire-retardant and additive agents which are used, and which are admitted together with such raw materials on the requested ratios thereof, depending on the panel or finished product to be obtained; a mixing container 5 (for example of the rotary blades or scroll types) to mix opportunely the aggregate raw materials-fire-retardant and additive substances; an atomizer-sprayer device 6 for the wetting and/or steaming treatment of said aggregate so that to knead adequately the same aggregate, and for the possible sterilization thereof, with subsequent evaporation of said aggregate on an evaporator-dryer 7; a sprayer-atomizer 8 for liquid adhesives and bonding agents for the impregnation of the aggregate, so as to obtain a pre-formed product; a heated (or cooled) moulding or pressing station 9 with fixed compression forces, for obtaining respective panels or finished products; a drying oven 10 for fully drying such panels or finished products and a packaging station (or strapping station) 11 for the packing and shipment to the destination places of the panels or finished products.

Of course, it is possible to foresee manufacturing plants also different of that described only by way of example, provided that these plants are suitable for performing the process according to the invention.

## Claims

1. Manufacturing process of various types of products for the most different uses, particularly thermic and sound insulating panels for internal and external habitable ambients of buildings as well as partition and equipped walls, by employing raw materials consisting of paper, Bristol board, cardboard and similar materials, which have been rejected after their use, as well as cellulose and wastes of natural or synthetic fabrics from the clothing industry, which raw materials may be used separately or in combination with one another, and are preferably submitted to preventive drying, and by submitting in succession or at different periods said raw materials to a first step in which they are cut on particles of reduced dimensions with the form of strips and fibers by trituration, crushing, grinding and similar processes, a second step in which said particles of raw materials are mixed, preferably within mixing-containing devices, with adhesives and bonding agents, fire-retardant and water repellent substances, as well as at least one additive material suitable to confer special features to the mixture, and a third step in which said mixed particles are submitted to compression operations like moulding, pressing and the like, to obtain the product which subsequently is dried.

2. Manufacturing process according to claim 1, characterized in that said additive materials comprise liquid and condensate absorbing substances, anti-mildews substances, anti-corrosive and anti-odour substances, as well as bactericide, disinfectant, sterilizing and fertilizing substances, at different and variable ratios.

3. Manufacturing process according to claim 1, characterized in that said fire-retardant substances are constituted by carbonates, silicates, urea, micronized silica, borax, boron derivatives, antimony dioxide and antimony trioxide, kaolin, aluminium hydrate, talk and bentonite, which also absorb the humidity.

4. Manufacturing process according to claim 1, characterized in that said mixture of adhesives, bonding agents, raw materials and additive materials is moulded or pressed at cooled conditions, so as to obtain the crystallization thereof.

5. Product, particularly thermic and sound insulating panel for internal and external habitable ambients of buildings as well as for partition and equipped walls, characterized in that it is formed with the manufacturing process according to claims 1-4.

## Patentansprüche

1. Verfahren zur Herstellung von verschiedenartigen Gegenständen, die für die meistens Gebräuche geeignet sind, insbesondere Platten aus Wärmeschutz- und Schallisolier-Material für innere und äussere Gebäudewohnräumen sowie Trenn-und Ausrüstungswände, mittels Benutzung von aus Papier, Bristolkarton, Pappe und dgl. Materialien bestehenden Rohstoffen, die nach deren Benutzung abgeworfen wurden, sowie Zellulose und Abfälle von Natur- oder Kunstgeweben aus dem Bekleidungsgewerbe, wobei die Rohstoffe getrennt oder miteinander kombiniert benutzt werden können, und wobei diese Materialien vorzugsweise zur Vortrockung ausgesetzt sind, und wobei die Rohstoffe einer ersten Phase bei der sie auf streifen- und faserförmigen Teilchen verminderter Grösse durch Zerreib-, Zerklein-, Mahl- und dgl. Prozesse geschnitten werden, einer zweiten Phase bei der solche Rohstoff-Teilchen Vorzugsweise in Mischbehältervorrichtungen mit Klebstoffen, feuerhemmenden und wasserabweisenden Stoffen sowie mindestens einem Zusatzmaterial, das geeignet ist gesonderte Eigenschaften der Mischung zu erteilen, gemischt werden, und einer dritten Phase bei der solche gemischte Teilchen Kompressionsgängen wie Spritzgiessen, Pressen und dgl. ausgesetzt sind, um der Gegenstand mit darauffolgenden Trocknen davon zu erzeugen, nachfolgend oder aufverschiedene Zeitspanne ausgesetzt sind.

2. Herstellungsverfahren nach Anspruch 1, dadurch gekennzeichnet dass solche Zusatzmaterialien aus Flüssigkeits- und Kondenswasseraufnahmestoffen, Schimmelfeststoffen, Korrosionsschutzmitteln und Geruchsfeststoffen, sowie bakterientotenden, desinfizierenden, entkeimenden und düngenden Stoffen, mit verschiedenen und veränderbaren Verhältnissen davon, bestehen.

3. Herstellungsverfahren nach Anspruch 1, dadurch gekennzeichnet dass solche feuerhemmende Stoffe aus Karbonaten, Silikaten, Harnstoffen, mikronisierten Kieselerden, Borax, Borfolgeprodukten, Antimondioxyd und -trioxyd, Kaolin, Aluminiumhydrat, Talk und Bentonit, die auch die Feuchtigkeit aufnehmen, bestehen.

4. Herstellungsverfahren nach Anspruch 1, dadurch gekennzeichnet dass solche Mischung von Klebstoffen, Rohstoffen und Zusatzmaterialien unter gekühlten Bedingungen spritzgegossen oder gepresst ist, um deren Kristallisation zu erzielen.

5. Gegenstand, insbesondere Wärmeschutz- und Schallisolierplatte für innere und äussere Gebäudewohnräume sowie Trenn- und Ausrüstungswände, dadurch gekennzeichnet dass er mit dem Herstellungsverfahren nach Ansprüchen 1-4 gebildet ist.

## Revendications

1. Procédé de production de divers genres de produits pour les usages plus différents, en particulier de panneaux en matériau isolant thermique et phonique pour des milieux habités intérieurs et extérieurs de bâtiments ainsi que parois de séparation et équipées, en employant des matières premières constituées par de papier carton léger, carton et matériaux similaires, lesquelles ont étés jetées après leur usage, ainsi que de la cellulose et déchets de tissus naturels ou synthétiques de l'industrie de vêtements, lesquelles matières premières peuvent être employées séparées ou combinées entre elles, et sont soumises de préférence à séchage préalable, et en soumettant en succession ou à de différentes périodes lesdites matières premières à une première phase dans laquelle elles sont coupées en particules de dimensions réduites en forme de bandes et fibres, par de procédés de trituration, broyages, mouture et procédés similaires, une deuxième phase dans laquelle lesdites particules de matières premières sont mélangées, de préférence dans dispositifs récipients-mélangeurs, avec des adhésifs et substances collantes et substances ignifuges et hydrofuges, ainsi qu'au moins un matériau additif apte à conférer des particulières caractéristiques au mélange, et une troisième phase dans laquelle lesdites particules mélangées sont soumises à des opérations de compression comme le moulage, le pressage et similaire, pour obtenir le produit qui est ensuite séché.

2. Procédé de production suivant la revendication 1, caractérisé en ce que lesdits matériaux additifs comprennent des substances absorbant les liquides et la condensation, des substances antimoisissure, des substances anti-corrosives et anti-odeurs, ainsi que des substances bactéricides, désinfectants, stérilisantes et fertilisantes, avec proportions différentes et variables.

3. Procédé de production suivant la revendication 1, caractérisé en ce que lesdites substances ignifuges sont constituées par des carbonates, silicates, urée, silice micronisée, borax, dérivés du bore, bioxyde d' antimoine, trioxyde d'antimoine, kaolin, hydrate d'aluminium, talc et bentonite, qui absorbent aussi l'humidité.

4. Procédé de production suivant la revendication 1, caractérisé en ce que ledit mélange d'adhésifs, et substances collantes, matières premières et matériaux additifs est moulé ou pressé en conditions de refroidissement de sorte à obtenir son cristallisation.

5. Produit, en particulier panneau en matériau isolant thermique et phonique pour des milieux habités intérieurs et extérieurs de bâtiments ainsi que pour de parois de séparation et équipées, caractérisé en ce qu'il est réalisé par le procédé de production suivant les revendications 1-4.
